# EUROPEAN PATENT APPLICATION

(11) **EP 4 474 175 A1**
(43) Date of publication of application: **11.12.2024**
(21) Application number: 23178041.2
(22) Date of filing: 07.06.2023
(51) Int. Cl.: B60G 7/02, B60J 5/04, B60N 2/005, F16B 1/00

(54) **MOUNTING SYSTEM FOR ASSEMBLING A MECHANICAL COMPONENT**

(71) Applicant: Volvo Car Corporation, 405 31 Göteborg (SE)
(72) Inventor: SKAGIUS, Adam, 40531 Göteborg (SE); NORDELL, Magnus, 40531 Göteborg (SE)
(74) Representative: Maiwald GmbH

(57) **Abstract**

The present disclosure relates to a mounting system for assembling a mechanical component, a wheel suspension system for a vehicle comprising the mounting system, and an assembling method of a mechanical component. The mounting system comprises a bracket member and an exchangeable connecting member. The exchangeable connecting member is couplable with the mechanical component to be assembled. The bracket member comprises an accommodating portion. The accommodating portion is adapted to at least partially receive the exchangeable connecting member to releasably fasten the exchangeable connecting member at the bracket member.

## Description

The present disclosure relates to a mounting system for assembling a mechanical component, a wheel suspension system for a vehicle comprising the mounting system, and an assembling method of a mechanical component. Further, the present disclosure relates to a door assembly comprising the mounting system, a seat assembly comprising the mounting system and a vehicle comprising the wheel suspension system, the door assembly and/or the seat assembly.

Positioning of interfaces for assembling mechanical components are a very important in the automotive industry. Mechanical assemblies often require repeated alignment and adjustment due to manufacturing inconsistences, which may increase manufacturing time and costs. Further, heavy load on the mechanical assemblies may also require an extensive maintenance work. For instance in a wheel suspension assembly, an upper control arm in a vehicle suspension is usually positioned by two nuts and their positions control the camber and caster angles of the wheels. Generally, the nuts are fixedly welded at the vehicle suspension components and/or a vehicle body. Thus, a re-alignment of the control arm is limited or requires extensive effort due to the welded nuts if the caster angle and/or the camber angle need to be adjusted. An inaccurate position of the camber and or caster angle would significantly influence a drivability of the vehicle.

The problem is at least partially solved or alleviated by the subject matter of the independent claims of the present disclosure, wherein further examples are incorporated in the dependent claims.

According to a first aspect, there is provided a mounting system for assembling a mechanical component. The mounting system comprises a bracket member and an exchangeable connecting member. The exchangeable connecting member is couplable with the mechanical component to be assembled. The bracket member comprises an accommodating portion. The accommodating portion is adapted to at least partially receive the exchangeable connecting member to releasably fasten the exchangeable connecting member at the bracket member.

The mounting system according to the present disclosure facilitates an assembly of the various mechanical components, which particularly require an accurate alignment to ensure a reliable functionality. The exchangeable connecting member of the mounting system may be individually selected based on a position of the mechanical component to be assembled. Accordingly, a post-adjustment and alignment of the mechanical component after assembly may be avoided, which may allow saving manufacturing costs and manufacturing time.

The mounting system may act as an interface between a mechanical body or structure and the mechanical component, which needs to be fixedly assembled at the mechanical body. The mechanical body may be for instance a vehicle body, a door body and/or a seat body. The bracket member may be fixedly mounted at the mechanical body or structure using a fixing element such as a screw or an adhesive material. The bracket member may comprise a metallic material, a plastic material or a combination thereof to provide a high strength and durability. Since the bracket member and the exchangeable connecting member may be separately manufactured and individually provided, each of the bracket member and the exchangeable connecting member may be easily replaced.

The exchangeable connecting member may be formed in a various shape and/or structure. Accordingly, the exchangeable connecting member may be easily replaced based on the current assembling position of the mechanical component. In other words, the exchangeable connecting member may be selected or changed to facilitate the assembly of the mechanical component.

The exchangeable connecting member may be configured to be connected to the mechanical component. The exchangeable connecting member and the mechanical component may be fastened to each other by fixing element. For instance, the exchangeable connecting member may be formed as a nut. The mechanical component may be coupled to the exchangeable connecting member in such a manner that the mechanical component does not interfere an insertion or removal of the exchangeable connecting member into or from the bracket member. For instance, the mechanical component may be arranged opposite to the bracket member relative to the exchangeable connecting member. Alternatively, the mechanical component may be arranged along an insertion direction of the exchangeable connecting member into the bracket member.

The bracket member may be formed to at least partially receive the exchangeable connecting member. In particular, the accommodating portion of the bracket member may be configured to at least partially receive the exchangeable connecting member. In other words, the exchangeable connecting member may be formed such that the exchangeable connecting member may be at least partially inserted into or removed out of the accommodating portion of the bracket member.

The exchangeable connecting member may be releasably arranged at the bracket member or the accommodating portion. However, once the exchangeable connecting member is positioned in the accommodating portion of the bracket member, the exchangeable connecting member may be fixedly retained in the accommodating portion such that an assembly adjustment of the mechanical component may not be shifted.

According to an example, the bracket member comprises a trim portion. The trim portion surrounds at least partially the accommodating portion. The trim portion is adapted to guide the exchangeable connecting member in the accommodating portion of the bracket member. The trim portion may be adapted to form a passage for inserting or removing the exchangeable connecting member into or from the accommodating portion of the bracket member. Accordingly, the trim portion may be adapted to hold the exchangeable connecting member in place such that the exchangeable connecting member is not disengaged in an undesired direction.

The trim portion may be formed substantially along a circumference of the accommodating portion such that the trim portion may also surround a circumference of the exchangeable connecting member when the exchangeable connecting member is inserted into the bracket member. However, the trim portion may comprise an opening to receive exchangeable connecting member in the accommodating portion. Accordingly, engaging the exchangeable connecting member at the bracket member may be facilitated.

According to an example, the exchangeable connecting member comprises a body portion. The body portion is plate-shaped and dimensioned to be inserted in the accommodating portion of the bracket member. The accommodating portion may be formed to conform to the shape of the body portion of the exchangeable connecting member. Preferably, at least the body portion of the exchangeable connecting member may be formed in a plate shape to facilitate the insertion or removal of the exchangeable connecting member into or from the bracket member. However, the shape of the body portion of the exchangeable connecting member may not be limited to the plate shape.

When the body portion of the exchangeable connecting member is inserted into the accommodating portion, the trim portion of the bracket member may at least partially surround the body portion. Accordingly, the body portion may be easily guided in the accommodating portion during the insertion and the firmly held in position.

According to an example, the exchangeable connecting member comprises an aperture penetrating the body portion. The aperture is couplable with the mechanical component. The aperture may comprise a thread portion at an inner wall of the aperture. The aperture may extend from a front surface to a rear surface of the body portion of the exchangeable connecting member. In other words, the aperture may be formed substantially perpendicular to the surface of the body portion of the exchangeable connecting member. However, the aperture may extend throughout the body portion at an inclined angle relative to a plane of the body portion.

The aperture may be adapted to be coupled with the mechanical component, preferably by a fixing element. In other words, the aperture may be exposed to the environment without being covered by the trim portion or the bracket member, when the exchangeable connecting member is inserted in the accommodating portion of the bracket member. Accordingly, the fixing element such as screw or nut may interconnect the body portion of the exchangeable connecting member and the mechanical component.

The aperture may be formed at a center of the surface of the body portion of the exchangeable connecting member. Alternatively, the aperture may be off set from the center of the surface of the body portion in a horizontal or vertical direction. Accordingly, a suitable exchangeable connecting member may be selected based on the position of the aperture and the position of the mechanical component to be aligned.

According to a second aspect, there is provided a wheel suspension system for a vehicle. The wheel suspension system comprises at least a first mounting system as described above and a control arm with at least one joint portion. The control arm is couplable with a wheel assembly of the vehicle and capable to adjust a mounting position of the wheel assembly. A bracket member of the first mounting system is mountable at a vehicle body. An exchangeable connecting member of the first mounting system is connected to the joint portion of control arm. The exchangeable connecting member is inserted in an accommodating portion of the bracket member of the first mounting system for adjusting the mounting position of the wheel assembly.

The wheel suspension system may be configured to ensure a reliable alignment between wheels and the vehicle body for absorbing road shocks during driving. Accordingly, the wheel suspension system may ensure an accurate alignment of mechanical components connected to each other such as front and rear wheels, springs, shock absorbers, drive axles, etc.

The control arm may be an upper control arm. The control arm may be positioned between the wheel assembly and the vehicle body and adapted to adjust an optimal mounting position of the wheel assembly. The first mounting system may be arranged between the control arm and the vehicle body to firmly hold the control arm at the vehicle body. The control arm may comprise a join portion, optionally a bushing portion, adapted to be coupled with the mounting system.

Accordingly, the bracket member of the first mounting system may be fixedly mounted at the vehicle body. Further, the exchangeable connecting member of the first mounting system may be connected to the joint portion of the control arm. Particularly, a fixing means may interconnect the joint portion of the control arm and the aperture formed on the body portion of the exchangeable connecting member.

When assembling the control arm at the vehicle body, the exchangeable connecting member may be selected based on the position of the aperture formed on the body portion of the exchangeable connecting member and the accurate alignment of the control arm. The assembled position of the control arm may be adjusted by inserting the exchangeable connecting member to the accommodating portion of the bracket member, wherein the insertion may be guided by the trim portion at least partially surrounding the accommodating portion.

If the alignment of the control arm needs to be adjusted and/or any component of the wheel suspension system needs to be repaired or replaced, the control arm may be easily released from the vehicle body, by removing the exchangeable connecting member out of the accommodating portion of the bracket member. When re-aligning the control arm, the exchangeable connecting member may be replaced by a new exchangeable connecting member having an aperture at a different position from the previous one to ensure an accurate alignment of the control arm relative to the vehicle body and the wheel assembly.

According to an example, the wheel suspension system further comprises a second mounting system. The first mounting system and the second mounting system are arranged at each joint portion of the control arm. The control arm may comprise at least two arm portions, wherein each arm portion comprise a joint portion. However, the number of the mounting system connecting the control arm and the vehicle body may not be limited, and comprise more than two mounting system.

The first mounting system may be arranged at a first arm portion of the control arm and the second mounting system may be arranged at a second arm portion of the control arm. In particular, the bracket member of the first mounting system and the bracket member of the second mounting system may be fixedly mounted at the vehicle body. The exchangeable connecting member of the first mounting system may be arranged at the joint portion of the first arm portion and the exchangeable connecting member of the second mounting system may be arranged at the joint portion of the second arm portion.

The exchangeable connecting member of the first mounting system and the exchangeable connecting member of the second mounting system may be formed identically or differently from each other. However, the exchangeable connecting member of the first mounting system and the exchangeable connecting member of the second mounting system may be formed to be releasably fastened at the corresponding bracket member.

The control arm may be formed symmetrically. In such case, the arm portions, thus the joint portions may be arranged to face each other. Each mounting system may be adapted to individually and independently adjust the position of the control arm from each other. In other words, the first and second mounting systems may be able to adjust the position of the control arm in a same or different direction.

According to an example, the mounting position comprises at least one of a camber angle and a caster angle. The term camber angle may be understood as an angle of a wheel between a vertical axis of the wheel and a vertical axis of the vehicle. In other words, the camber angle may indicate, how much the wheel is tilted in direction to the vehicle body relative to a vertical axis of the wheel. The term caster angle may be understood as an angular displacement of the steering axis from the vertical axis of a steered wheel.

The first mounting system and/or the second mounting system may be arranged at each arm portion of the control arm to adjust the camber angle and/or a caster angle of the wheel assembly. In particular, the camber angle may be adjusted by adjusting the mounting position of both arm portions of the control arm in a same direction and the caster angle may be adjusted by adjust the mounting position the arm portions in an opposite direction to each other.

According to an example, the wheel suspension system is adapted to adjust the caster angle of the wheel assembly by exchanging the exchangeable connecting member of the first mounting system or the exchangeable connecting member of the second mounting system. According to an example, the wheel suspension system is adapted to adjust the camber angle of the wheel assembly by exchanging the exchangeable connecting member of the first mounting system and the exchangeable connecting member of the second mounting system.

The adjustment of the mounting position of each arm portion may be achieved by replacing a proper exchangeable connecting member based on the position of the aperture and the position of the respective arm portion to be aligned. Accordingly, the mounting position of the control arm may be easily adjusted without disassembling the entire wheel assembly. Particularly, the trim portion of the bracket member may facilitate the insertion or removal of the exchangeable connecting member into or out of the bracket member.

According to a third aspect, there is provided a door assembly for a vehicle. The door assembly comprises at least one mounting system as described above and a door body. The mounting system is adapted to adjust a mounting position of the door body. The mounting system may be arranged at the door body and configured to adjust the mounting position relative to the vehicle body. In particular, using a suitable exchangeable connecting member, the door body may be accurately aligned with the vehicle body based on the position of the aperture on the exchangeable connecting member.

According to a fourth aspect, there is provided a seat assembly for a vehicle. The seat assembly comprises at least one mounting system as described above and a seat body. The mounting system is adapted to adjust a mounting position of the seat body. The mounting system is adapted to adjust a mounting position of the seat assembly. The mounting system may be arranged at the seat body and configured to adjust the mounting position relative to the vehicle body. In particular, using a suitable exchangeable connecting member, the seat body may be accurately aligned with the vehicle body based on the position of the aperture on the exchangeable connecting member.

According to a fifth aspect, there is provided a vehicle. The vehicle comprises at least one of a wheel suspension system as described above, a door assembly as described above and a seat assembly as described above.

According to a sixth aspect, there is provided an assembling method of a mechanical component. The method comprises the steps of
- coupling an exchangeable connecting member with the mechanical component to be assembled, and
- receiving at least partially the exchangeable connecting member at an accommodating portion of the bracket member to releasably fasten the exchangeable connecting member at the bracket member.

It should be noted that the above examples may be combined with each other irrespective of the aspect involved. Accordingly, the method may be combined with structural features and, likewise, the apparatus and the system may be combined with features described above with regard to the method.

These and other aspects of the present disclosure will become apparent from and elucidated with reference to the examples described hereinafter.

Examples of the disclosure will be described in the following with reference to the following drawings.
- Figures 1a and 1b: show schematically an example of a mounting system for assembling a mechanical component according to the present disclosure.
- Figures 2a to 2c: show schematically an example of a mounting system according to the present disclosure.
- Figures 3a to 3e: show schematically an example of an exchangeable connecting member according to the present disclosure.
- Figure 4: shows schematically an example of a wheel suspension system for a vehicle according to the present disclosure.
- Figure 5a, 5b: show schematically an example of a control arm.
- Figure 6: shows schematically an example of a door assembly for a vehicle according to the present disclosure.
- Figure 7: shows schematically an example of a seat assembly for a vehicle according to the present disclosure.

The Figures are merely schematic representations and serve only to illustrate examples of the disclosure. Identical or equivalent elements are in principle provided with the same reference signs.

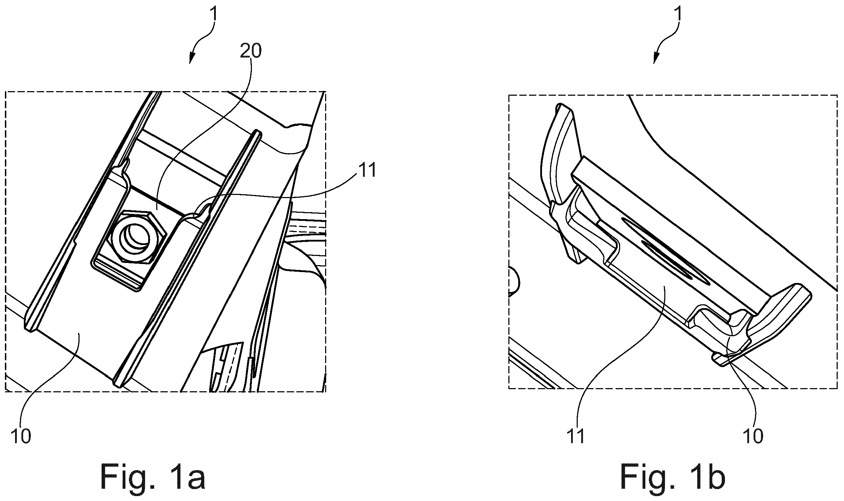

Figure 1a and 1b show a mounting system 1 for assembling a mechanical component. The mechanical component may be for instance a part of a vehicle such as a wheel suspension system 3, door assembly 4 and/or a seat assembly 5.

The mounting system 1 comprises a bracket member 10 and an exchangeable connecting member 20. The exchangeable connecting member 20 is couplable with the mechanical component to be assembled. The bracket member 10 comprises an accommodating portion 11. The accommodating portion 11 is adapted to at least partially receive the exchangeable connecting member 20 to releasably fasten the exchangeable connecting member 20 at the bracket member 10.

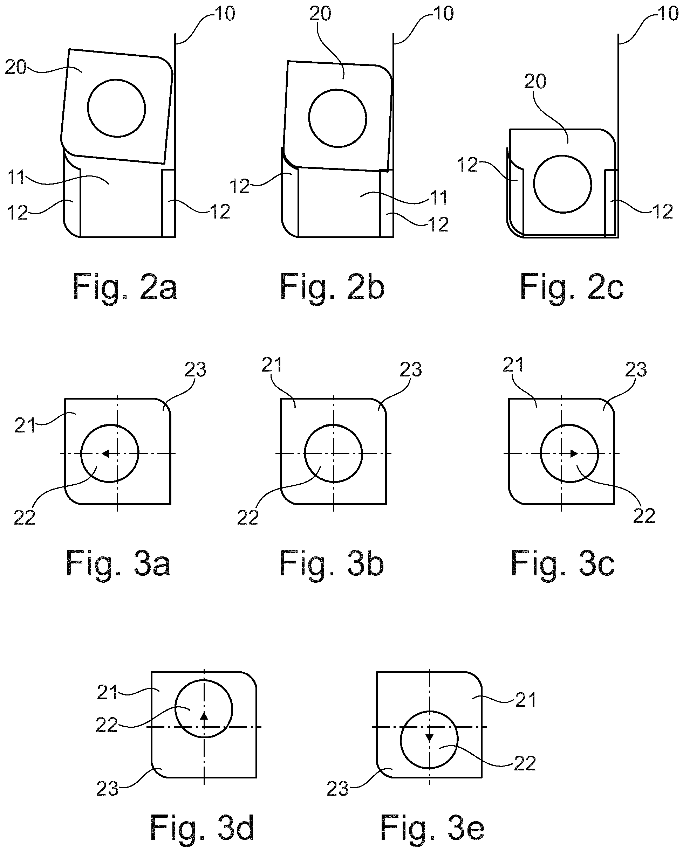

As shown in Figures 2a to 2c, the bracket member 10 comprises a trim portion 12. The trim portion 12 surrounds at least partially the accommodating portion 11. The trim portion 12 is adapted to guide the exchangeable connecting member 20 in the accommodating portion 11 of the bracket member 10.

Figure 3a to 3e show the exchangeable connecting member 20 in different variations. The exchangeable connecting member 20 comprises a body portion 21. The body portion 21 is plate-shaped and dimensioned to be inserted in the accommodating portion 11 of the bracket member 10. Optionally, at least one edge 23 of the body portion 21 may be rounded to facilitate the insertion of the exchangeable connecting member 20 in the accommodating portion 11 of the bracket member 10.

The exchangeable connecting member 20 comprises an aperture 22 penetrating the body portion 21. The aperture 22 is adapted to be connected to the mechanical component to be assembled and aligned, for instance using a fixing element. The aperture 22 may be positioned at a center of the surface of the body portion 21 of the exchangeable connecting member 20. Alternatively, the aperture 22 may be off set from the center of the surface of the body portion 21 in a horizontal or vertical direction. Accordingly, a suitable exchangeable connecting member 20 may be selected based on the position of the aperture 22 and the position of the mechanical component to be assembled.

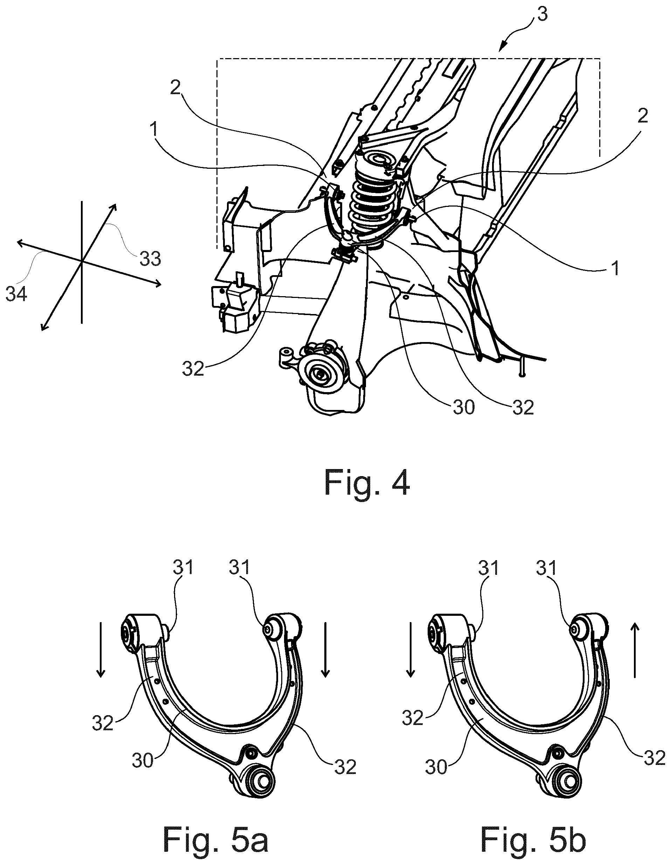

Figure 4 shows a wheel suspension system 3 for a vehicle. The wheel suspension system 3 comprises a control arm 30 with two arm portions 32 having joint portion 31s and two mounting system 1s. The control arm 30 is couplable with a wheel assembly (not shown) of the vehicle and capable to adjust a mounting position of the wheel assembly. The first mounting system 1 and the second mounting system 1 are arranged at each joint portion 31 of the control arm 30.

The first mounting system 1 is arranged at a first arm portion 32 of the control arm 30 and the second mounting system 1 may is arranged at a second arm portion 32 of the control arm 30. In particular, the first bracket member 10 of the first mounting system 1 and the second bracket member 10 of the second mounting system 1 are fixedly mounted at a vehicle body 2. The exchangeable connecting member 20 of the first mounting system 1 is arranged at the joint portion 31 of the first arm portion 32 and the exchangeable connecting member 20 of the second mounting system 1 is arranged at the joint portion 31 of the second arm portion 32.

The exchangeable connecting member 20 of the first mounting system 1 is inserted in the accommodating portion 11 of the bracket member 10 of the first mounting system 1 and the exchangeable connecting member 20 of the second mounting system 1 is inserted in the accommodating portion 11 of the bracket member 10 of the second mounting system 1 for adjusting the mounting position of the wheel assembly. Particularly, the wheel suspension system 3 is adapted to adjust a camber angle and/or a caster angle of the wheel assembly.

As shown in Figure 5a, the camber angle may be adjusted by adjusting the mounting position of the first arm portion 32 and the second arm portion 32 of the control arm 30 in a same direction 33 by the first mounting system 1 and the second mounting system 1, which are arranged at each arm portion 32 of the control arm 30. Further as shown in Figure 5b, the caster angle may be adjusted by adjusting the mounting position of the first arm portion 32 and the second arm portion 32 of the control arm 30 in an opposite direction 34 to each other by the first mounting system 1 and the second mounting system 1, which are arranged at each arm portion 32 of the control arm 30.

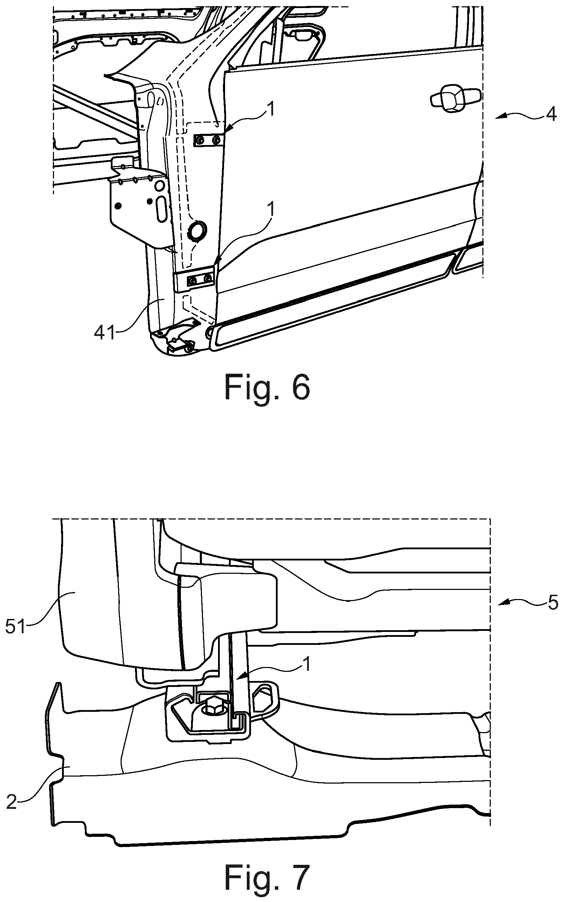

Figure 6 shows a door assembly 4 for a vehicle. The door assembly 4 comprises four mounting system 1 and a door body 41. The mounting system 1 is adapted to adjust a mounting position of the door body 41. The mounting system 1s are arranged at the door body 41 and configured to adjust the mounting position relative to the vehicle body 2. In particular, using a suitable exchangeable connecting member 20, the door body 41 may be accurately aligned with the vehicle body 2 based on the position of the aperture 22 on the exchangeable connecting member 20.

Figure 7 shows a seat assembly 5 for a vehicle. The seat assembly 5 comprises at least one mounting system 1 and a seat body 51. The mounting system 1 is adapted to adjust a mounting position of the seat body 51. The mounting system 1 is adapted to adjust a mounting position of the seat assembly 5. The mounting system 1 is arranged at the seat body 51 and configured to adjust the mounting position relative to the vehicle body 2. In particular, using a suitable exchangeable connecting member 20, the seat body 51 may be accurately aligned with the vehicle body 2 based on the position of the aperture 22 on the exchangeable connecting member 20.

Other variations to the disclosed examples can be understood and effected by those skilled in the art in practicing the claimed disclosure, from the study of the drawings, the disclosure, and the appended claims. In the claims the word "comprising" does not exclude other elements or steps and the indefinite article "a" or "an" does not exclude a plurality. A single processor or other unit may fulfill the functions of several items or steps recited in the claims. The mere fact that certain measures are recited in mutually different dependent claims does not indicate that a combination of these measures cannot be used to advantage. Any reference signs in the claims should not be construed as limiting the scope of the claims.

### LIST OF REFERENCE SIGNS

- 1: mounting system
- 2: vehicle body
- 3: wheel suspension system
- 4: door assembly
- 5: seat assembly
- 10: bracket member
- 11: accommodating portion of the bracket member
- 12: trim portion of the bracket member
- 20: exchangeable connecting member
- 21: body portion of the exchangeable connecting member
- 22: aperture of the exchangeable connecting member
- 23: edge of the exchangeable connecting member
- 30: control arm
- 31: joint portion
- 32: arm portion of the control arm
- 33: direction for adjusting a camber angle
- 34: direction for adjusting a caster angle
- 41: door body
- 51: seat body

## Claims

1. A mounting system (1) for assembling a mechanical component, comprising
- a bracket member (10), and
- an exchangeable connecting member (20),
the exchangeable connecting member (20) being couplable with the mechanical component to be assembled,
the bracket member (10) comprising an accommodating portion (11), and
the accommodating portion (11) being adapted to at least partially receive the exchangeable connecting member (20) to releasably fasten the exchangeable connecting member (20) at the bracket member (10).

2. The mounting system (1) according to claim 1, the bracket member (10) comprising a trim portion (12), the trim portion (12) surrounding at least partially the accommodating portion (11), the trim portion (12) being adapted to guide the exchangeable connecting member (20) to be inserted in the accommodating portion (11) of the bracket member (10).

3. The mounting system (1) according to claim 1 or 2, the exchangeable connecting member (20) comprising a body portion (21), the body portion (21) being plate-shaped and dimensioned to be inserted in the accommodating portion (11) of the bracket member (10).

4. The mounting system (1) according to any of the preceding claims, the exchangeable connecting member (20) comprising an aperture (22) penetrating the body portion (21), the aperture (22) being couplable with the mechanical component.

5. The mounting system (1) according to the preceding claim, the aperture being positioned at a center of the body portion (21) of the exchangeable connecting member (20) or offset from the center of the body portion (21) of the exchangeable connecting member (20).

6. A wheel suspension system (3) for a vehicle, comprising
at least a first mounting system (1) according to any of the preceding claims 1 to 6,
and
a control arm (30) with at least one joint portion (31),
the control arm (30) being couplable with a wheel assembly of the vehicle and capable to adjust a mounting position of the wheel assembly,
a bracket member (10) of the first mounting system (1) being mountable at a vehicle body (2),
an exchangeable connecting member (20) of the first mounting system (1) being connected to the joint portion of control arm (30), and
the exchangeable connecting member (20) being inserted in an accommodating portion (11) of the bracket member (10) of the first mounting system (1) for adjusting the mounting position of the wheel assembly.

7. The wheel suspension system (3) according to claim 6, further comprising a second mounting system (1), the first mounting system (1) and the second mounting system (1) being arranged at each joint portion (31) of the control arm (30).

8. The wheel suspension system (3) according to claim 6 or 7, the mounting position comprising at least one of a camber angle and a caster angle.

9. The wheel suspension system (3) according to claim 8, the wheel suspension system (3) being adapted to adjust the caster angle of the wheel assembly by exchanging the exchangeable connecting member (20) of the first mounting system (1) or the exchangeable connecting member (20) of the second mounting system (1).

10. The wheel suspension system (3) according to claim 8, the wheel suspension system (3) being adapted to adjust the camber angle of the wheel assembly by exchanging the exchangeable connecting member (20) of the first mounting system (1) and the exchangeable connecting member (20) of the second mounting system (1).

11. A door assembly (4) for a vehicle, comprising
at least one mounting system (1) according to any of the preceding claims 1 to 5, and a door body (41),
the mounting system (1) being adapted to adjust a mounting position of the door body (41).

12. A seat assembly (5) for a vehicle, comprising
at least one mounting system (1) according to any of the preceding claims 1 to 5, and a seat body (51),
the mounting system (1) being adapted to adjust a mounting position of the seat body (51).

13. A vehicle, comprising at least one of a wheel suspension system (3) according to any of the preceding claims 6 to 10, a door assembly (4) according to claim 11 and a seat assembly (5) according to claim 12.

14. An assembling method of a mechanical component, comprising,
- coupling an exchangeable connecting member (20) with the mechanical component to be assembled, and
- receiving at least partially the exchangeable connecting member (20) at an accommodating portion (11) of the bracket member (10) to releasably fasten the exchangeable connecting member (20) at the bracket member (10).

## Amended claims

### Amended claims in accordance with Rule 137(2) EPC.

1. A mounting system (1) for assembling a mechanical component, comprising
- a bracket member (10), and
- an exchangeable connecting member (20),
the exchangeable connecting member (20) being couplable with the mechanical component to be assembled,
the bracket member (10) comprising an accommodating portion (11),
the accommodating portion (11) being adapted to at least partially receive the exchangeable connecting member (20) to releasably fasten the exchangeable connecting member (20) at the bracket member (10),
the exchangeable connecting member (20) comprising a body portion (21), the body portion (21) being plate-shaped and dimensioned to be inserted in the accommodating portion (11) of the bracket member (10), and
the exchangeable connecting member (20) further comprising an aperture (22) penetrating the body portion (21), the aperture (22) being couplable with the mechanical component,
**characterized by**
the aperture (22) comprising a thread portion at an inner wall of the aperture (22).

2. The mounting system (1) according to claim 1, the bracket member (10) comprising a trim portion (12), the trim portion (12) surrounding at least partially the accommodating portion (11), the trim portion (12) being adapted to guide the exchangeable connecting member (20) to be inserted in the accommodating portion (11) of the bracket member (10).

3. The mounting system (1) according to any of the preceding claims, the aperture being positioned at a center of the body portion (21) of the exchangeable connecting member (20) or offset from the center of the body portion (21) of the exchangeable connecting member (20).

4. A wheel suspension system (3) for a vehicle, comprising
at least a first mounting system (1) according to any of the preceding claims 1 to 3, and
a control arm (30) with at least one joint portion (31),
the control arm (30) being couplable with a wheel assembly of the vehicle and capable to adjust a mounting position of the wheel assembly,
the bracket member (10) of the first mounting system (1) being mountable at a vehicle body (2),
the exchangeable connecting member (20) of the first mounting system (1) being connected to the joint portion of control arm (30), and
the exchangeable connecting member (20) being inserted in an accommodating portion (11) of the bracket member (10) of the first mounting system (1) for adjusting the mounting position of the wheel assembly.

5. The wheel suspension system (3) according to claim 4, further comprising a second mounting system (1), the first mounting system (1) and the second mounting system (1) being arranged at each joint portion (31) of the control arm (30).

6. The wheel suspension system (3) according to claim 4 or 5, the mounting position comprising at least one of a camber angle and a caster angle.

7. The wheel suspension system (3) according to claim 6, the wheel suspension system (3) being adapted to adjust the caster angle of the wheel assembly by exchanging the exchangeable connecting member (20) of the first mounting system (1) or the exchangeable connecting member (20) of the second mounting system (1).

8. The wheel suspension system (3) according to claim 6, the wheel suspension system (3) being adapted to adjust the camber angle of the wheel assembly by exchanging the exchangeable connecting member (20) of the first mounting system (1) and the exchangeable connecting member (20) of the second mounting system (1).

9. A door assembly (4) for a vehicle, comprising
at least one mounting system (1) according to any of the preceding claims 1 to 3, and a door body (41),
the mounting system (1) being adapted to adjust a mounting position of the door body (41).

10. A seat assembly (5) for a vehicle, comprising
at least one mounting system (1) according to any of the preceding claims 1 to 3, and a seat body (51),
the mounting system (1) being adapted to adjust a mounting position of the seat body (51).

11. A vehicle, comprising at least one of a wheel suspension system (3) according to any of the preceding claims 4 to 8, a door assembly (4) according to claim 9 and a seat assembly (5) according to claim 10.

12. An assembling method of a mechanical component, comprising,
- coupling an exchangeable connecting member (20) with the mechanical component to be assembled, and
- receiving at least partially the exchangeable connecting member (20) at an accommodating portion (11) of a bracket member (10) to releasably fasten the exchangeable connecting member (20) at the bracket member (10),
the exchangeable connecting member (20) comprising a body portion (21), the body portion (21) being plate-shaped and dimensioned to be inserted in the accommodating portion (11) of the bracket member (10),
the exchangeable connecting member (20) further comprising an aperture (22) penetrating the body portion (21), the aperture (22) being couplable with the mechanical component,
the aperture (22) comprising a thread portion at an inner wall of the aperture (22).
